(19) **Europäisches Patentamt**

**European Patent Office**

**Office européen des brevets**

(11) Veröffentlichungsnummer: **0 462 151 B1**

(12) # EUROPÄISCHE PATENTSCHRIFT

(45) Veröffentlichungstag der Patentschrift: **03.08.94**

(21) Anmeldenummer: **90904274.9**

(22) Anmeldetag: **03.03.90**

(86) Internationale Anmeldenummer:
**PCT/EP90/00353**

(87) Internationale Veröffentlichungsnummer:
**WO 90/10780 (20.09.90 90/22)**

(51) Int. Cl.⁵: **E21B 33/138**, C09K 17/00,
C08K 3/34

(54) **WÄSSRIGE HARZZUBEREITUNGEN FÜR DIE GESTEINSVERFESTIGUNG UND HOHLRAUMVERFÜLLUNG UND VERFAHREN HIERZU.**

(30) Priorität: **11.03.89 DE 3907989**

(43) Veröffentlichungstag der Anmeldung:
**27.12.91 Patentblatt 91/52**

(45) Bekanntmachung des Hinweises auf die
Patenterteilung:
**03.08.94 Patentblatt 94/31**

(84) Benannte Vertragsstaaten:
**AT CH DE FR GB IT LI NL SE**

(56) Entgegenhaltungen:
**DE-A- 115 698**
**GB-A- 1 106 301**
**US-A- 3 237 691**
**US-A- 4 114 382**
**US-A- 4 473 119**

(73) Patentinhaber: **Henkel Kommanditgesellschaft auf Aktien**

**D-40191 Düsseldorf(DE)**

Patentinhaber: **E. EPPLE & CO. GMBH**
**Seidenstrasse 55-57**
**D-70174 Stuttgart(DE)**

(72) Erfinder: **MÜLLER, Heinz**
**Goldregenweg 4**
**D-4019 Monheim(DE)**
Erfinder: **HEROLD, Claus-Peter**
**Ostpreussenstrasse 26**
**D-4020 Mettmann(DE)**
Erfinder: **VON TAPAVICZA, Stephan**
**Thomas-Mann-Strasse 12**
**D-4006 Erkrath 2(DE)**
Erfinder: **EDEL, Edmund**
**Oberlinstrasse 3**
**D-7024 Filderstadt 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Verbesserungen von wäßrigen Kunstharzsystemen auf Basis von Melaminharzen und/oder Harnstoff-Formaldehydharzen, die zur Gesteinsverfestigung bzw. als Mittel zur Hohlraumverfüllung eingesetzt werden.

Die Verbesserung der Gebirgsfestigkeit durch Injektion von üblicherweise wäßrig aufbereiteten Hilfschemikalien ist eine alte und vielgestaltige Problemstellung. Als Abdichtungs- und Verfestigungsmedien wird eine Vielzahl von Suspensionen, Emulsionen oder Lösungen angeboten. Zement und anorganische Natriumsilikate sind an sich billig und wirtschaftlich, jedoch nur dort sinnvoll einzusetzen, wo die Gesteinsdurchlässigkeit groß genug ist und keine oder wenig aggressive Wässer vorhanden sind. Verbesserte Arbeitsbedingungen und Festigkeitseigenschaften werden durch den Einsatz von organischen Kunststoffen erhalten. Die Kunststoffe können in Form von Lösungen und/oder Suspensionen und/oder Emulsionen eingesetzt werden, wobei hier durch jeweilige Auswahl der Kunststoffe beträchtliche Möglichkeiten der Modifizierung von Festigkeit, Viskosität, Haftfähigkeit des verfestigenden Materials am Gestein und dergleichen bestehen. Als Kunststoffe sind verschiedenartigste Typen für den hier betroffenen Zweck vorgeschlagen worden, beispielsweise Epoxidharze, Polyurethane und andere Thermoplaste sowie Duroplaste.

Besondere Bedeutung kommt heute Systemen auf Basis von Polyurethanen zu, wie sie z. B. in der Fachzeitschrift "Glückauf" 112(1976), 803-807 beschrieben sind.

Wegen der hohen Toxizität der Isocyanate sind diese Systeme aber aus ökologischen Gründen immer weniger einsetzbar.

Auch Melamin- und Harnstoff-Formaldehyd-Harze sind vorgeschlagen worden, die üblicherweise in wäßriger Lösung bzw. Suspension in das zu verdichtende Gestein injiziert werden und dort unter dem Einfluß eines mitapplizierten Härters in weitgehend vorbestimmbaren Zeiträumen aushärten. Als Härter für Harze der hier zuletzt beschriebenen Art kommen saure und/oder alkalische Systeme in Betracht, wobei besondere Bedeutung die sauren Systeme und hier insbesondere die Mineralsäuren haben. Druckschriftlicher Stand der Technik zu der Verbesserung der Gebirgsfestigkeit durch chemische Injektionen, insbesondere im Zusammenhang mit der Abdichtung von Öl- und Gasbohrungen findet sich beispielsweise in der DE-AS 11 53 698 und der Veröffentlichung H. Barthel, "Verbesserung der Gebirgsfestigkeit durch chemische Injektionen" , Bergb.-Wiss. 17 (1970), Heft 8, 281 bis 285.

Eine technologische Schwierigkeit beim Einsatz solcher Melamin- bzw . Harnstoff-Formaldehyd-Systeme liegt in der Instabilität wäßriger Zubereitungen solcher Harze, die - auch schon ohne Zusatz von sauren Härtern - verhältnismäßig rasch einen beträchtlichen Viskositätsanstieg zeigen und damit in ihrer Verarbeitbarkeit beeinträchtigt sind. Insbesondere werden die Injizierbarkeit und das Durchdringungsvermögen der injizierten Harzlösung zunehmend beeinträchtigt. Nach der bisherigen Praxis werden daher die zu verarbeitenden Harzlösungen bzw. -suspensionen unmittelbar vor ihrem Einsatz hergestellt und müsse` dann vergleichsweise rasch aufgebraucht werden.

Die Erfindung geht von der Aufgabe aus, einen Weg aufzuzeigen, die Lagerstabilität wäßriger Harzzubereitungen der hier beschriebenen Art auf Basis von Melamin- und/oder Harnstoff-Formaldehydharzen substantiell zu verbessern. Das soll insbesondere auch dann möglich sein, wenn mit vergleichsweise hohen Aktivsubstanz-Gehalten in den wäßrigen Zubereitungen gearbeitet wird, die wünschenswerterweise oberhalb 50 Gew.-%, z. B. im Bereich von etwa 60 bis 75 Gew.-% liegen.

Die Erfindung geht in ihrem Kern von der Feststellung aus, daß durch Mitverwendung beschränkter Mengen einer ausgewählten synthetischen Zeolith-Verbindung - dem Natriumzeolith A und in etwas geringerem Ausmaße auch dem sich daraus ableitenden Hydrosodalith - die angestrebte Lagerbeständigkeit der wäßrigen Harzzubereitungen erreicht werden kann. Hierbei ist möglich, Lagerbeständigkeiten der wäßrigen Harzzubereitungen bis zum Zeitraum von einigen Monaten bei Raumtemperatur zu erreichen.

Gegenstand der Erfindung sind dementsprechend in einer ersten Ausführungsform wäßrige Zubereitungen von Säure-härtbaren Melaminharzen und/oder Harnstoff-Formaldehyd-Kondensaten, die insbesondere für den Einsatz bei der Gesteinsverfestigung und/oder der Hohlraumverfüllung geeignet sind und dadurch gekennzeichnet sind, daß sie zur Erhöhung ihrer Gebrauchsfähigkeit, insbesondere zur Verlängerung ihrer Lagerfähigkeit, einen Zusatz von Zeolith NaA und/oder Hydrosodalith enthalten.

In einer weiteren Ausführungsform betrifft die Erfindung ein verbessertes Verfahren zur Gesteinsverfestigung z. B. im Tunnelbau durch Injektion wäßriger Aufbereitungen von Melaminharz- und/oder Harnstoff-Formaldehyd-Kondensaten zusammen mit einem sauren Härter, wobei das Verfahren dadurch gekennzeichnet ist, daß wäßrige Zubereitungen eingesetzt werden, die zusammen mit den Melaminharz- und/oder Harnstoff-Formaldehyd-Kondensaten suspendierten Zeolith NaA und/oder Hydrosodalith enthalten und vor der Injektion mit einer bevorzugt wäßrigen Lösung des sauren Härters vermischt worden sind.

In einer weiteren Ausführungsform beschreibt die Erfindung schließlich die Verwendung von Zeolith NaA und/oder Hydrosodalith in wäßrigen Zubereitungen von Säure-härtbaren Melaminharzen und/oder Harnstoff-Formaldehyd-Kondensaten zur Verbesserung deren Gebrauchsfähigkeit und Verlängerung ihrer Lagerstabilität.

Der Gehalt der wäßrigen Zubereitungen der hier geschilderten Art an härtbarer Harz-Aktivsubstanz liegt üblicherweise im Bereich von etwa 50 bis 80 Gew.-% und vorzugsweise im Bereich von etwa 55 bis 75 Gew.-%. Es hat sich gezeigt, daß schon durch den Zusatz von sehr geringen Mengen der genannten feinteiligen unlöslichen mineralischen Stabilisatoren und insbesondere hier durch Zusatz sehr geringer Mengen des Zeolith NaA eine überraschend wirkungsvolle Verlängerung der Lagerfähigkeit eintritt. Die Lagerfähigkeit wird dabei durch den Vergleich der jeweiligen Viskositätswerte an ungealtertem und gealtertem Material bestimmt.

So hat sich insbesondere gezeigt, daß bereits Mengen von etwa 0,1 Gew.-% und vorzugsweise Mengen von wenigstens etwa 0,5 Gew.-% des Zeolith NaA - jeweils bezogen auf den Aktivsubstanzgehalt der wäßrigen Harzzubereitung - ausreichen, um die gewünschte Erhöhung der Lagerbeständigkeit zu erreichen. Geeignet sind insbesondere Mengen der genannten mineralischen Stabilisatoren im Bereich von etwa 0,1 bis 20 Gew.-%, vorzugsweise im Bereich von etwa 0,5 bis 15 Gew.-%. Mengen von etwa 1 bis 10 Gew.-% sind dabei voll ausreichend, eine Lagerstabilität bei Raumtemperatur über den Zeitraum von beispielsweise 2 bis 3 Monaten sicherzustellen.

In einer weiteren Ausgestaltung sieht die Erfindung vor, den wäßrigen Harzzubereitungen zusätzlich Harnstoff zuzusetzen bzw. diesen Harnstoff in der wäßrigen Phase zu lösen. Es hat sich in diesem Aspekt der Erfindung gezeigt, daß durch diese Maßnahme eine unerwünschte Freisetzung von Formaldehyd zurückgedrängt und sogar bis unter die Nachweisgrenze des Formaldehyds gesenkt werden kann. Für die Verarbeitung dieser Injektionslösungen beispielsweise gerade im Tunnelbau ist das begreiflicherweise ein beträchtlicher Vorteil. Die erfindungsgemäß bevorzugten Harnstoffmengen in der Injektionslösung liegen im Bereich von etwa 10 bis 40 Gew.-%, insbesondere im Bereich von etwa 15 bis 25 Gew.-% - wiederum jeweils bezogen auf den Aktivsubstanz-Gehalt der wäßrigen Lösung an Reaktivharzen.

Die Aushärtung der Harzlösung erfolgt in an sich bekannter Weise durch saure Katalyse, insbesondere durch Zusatz von Mineralsäuren. Wenn auch grundsätzlich beliebige Mineralsäuren zur Auslösung der Härtungsreaktion geeignet sind, so empfiehlt sich häufig die Verwendung von phosphoriger Säure. Es ist bekannt, daß diese Säure den Vorteil hat, Eisenteile nur wenig anzugreifen und damit nicht zu einer Wasserstoffbildung zu führen.

Die Mineralsäuren werden bevorzugt als wäßrige Lösungen den harzhaltigen Injektionslösungen vor der Applikation zugemischt. Es kann dabei besonders zweckmäßig sein, die Mineralsäuren zunächst in wäßrige Elektrolytsalzlösungen einzumischen und die in dieser Form verdünnten Säuren mit der zu injizierenden Harzaufbereitung zu vermischen. Geeignete Elektrolytsalze sind insbesondere wasserlösliche Salze der Alkali- und/oder Erdalkalimetallgruppe, wobei den Salzen des Natriums, des Calciums und/oder des Magnesiums besondere Bedeutung zukommt. Gut wasserlösliche Salze dieser Klasse, insbesondere die Chloride gegebenenfalls aber auch wasserlösliche Sulfate sind geeignete Vertreter dieser Elektrolytsalze. Beispiele hierfür sind Natriumchlorid und Calciumchlorid. Die Mineralsäuren werden dabei insbesondere in einer Konzentration von etwa 10 bis 30 Gew.-% in der Elektrolytsalzlösung eingesetzt, die ihrerseits die Elektrolytsalze in Mengen von etwa 10 bis 40 Gew.-% enthalten. Die Menge der zur Härtung eingesetzten Mineralsäure - bezogen auf Harz-Aktivsubstanz - liegt im üblichen Bereich und beträgt beispielsweise etwa 1 bis 15 Gew.-%.

Die nachfolgenden Beispiele zeigen in Vergleichsversuchen die stabilisierende Wirkung des erfindungswesentlichen Zusatzes der feinteiligen mineralischen Komponenten und insbesondere des Zeoliths NaA. Zeolith NaA selber und seine Herstellung sind im Stand der Technik ausführlich beschrieben. Verwiesen wird beispielsweise auf die grundlegende US-PS 2,882,243 (Milton) sowie die Veröffentlichung Donald W. Breck "ZEOLITE, MOLECULAR SIEVES" Structure Chemistry and Use, John Wiley & Sons, New York, London, 1974, Seite 133 sowie die zahlreichen anderen Angaben dieses Buches zur typischen Oxidformel, zu den kristallographischen Daten und den Struktureigenschaften. Synthetischer kristalliner Zeolith NaA findet heute großtechnischen Einsatz als Natrium-tripoly-phosphat-Austauschmaterial in Wasch- und Reinigungsmitteln, insbesondere in Textilwaschmitteln. Die Waschmittelqualitäten des Zeolith NaA sind für den Einsatz im Rahmen der Erfindung besonders geeignet. Auch Hydrosodalith und seine Herstellung sind in der angegebenen Literatur beschrieben.

**Beispiele**

Beispiel 1

In einer ersten Versuchsserie wird die Lagerbeständigkeit einer wäßrigen, 60 Gew.-% Aktivsubstanz enthaltenden Aufbereitung eines Melamin-/Harnstoff-Formaldehyd-Kondensationsproduktes mit überwiegenden Anteilen an Melaminharz untersucht. Dabei wird in einer ersten Versuchsreihe der Einfluß des Zusatzes von Harnstoff in ansteigenden Mengen zur Melaminharzlösung bestimmt. Als Melaminharz wird ein übliches Handelsprodukt eingesetzt. Ermittelt werden an den Lösungen jeweils die Viskositäten in mPas unmittelbar nach der Zumischung des Harnstoffes in den angegebenen Mengen zur Melaminharzlösung und die Viskosität der gleichen Lösung nach der Lagerung für den Zeitraum von 2 Monaten bei Raumtemperatur. Es ergibt sich die folgende Wertereihe.

|  |  | Viskosität in mPas | |
| --- | --- | --- | --- |
|  |  | sofort | nach 2 Monaten |
| a) Melaminharzlösung | + 10 Gew.-% Harnstoff | 900 | 3400 |
|  | + 20 Gew.-% Harnstoff | 625 | 2990 |
|  | + 30 Gew.-% Harnstoff | 500 | 2150 |
|  | + 40 Gew.-% Harnstoff | 325 | 1940 |

In einer weiteren Versuchsserie wird die Melaminharzlösung der angegebenen Zusammensetzung mit 20 Gew.-% Harnstoff vermischt. Die getrennten Materialproben dieser Lösung werden dann ansteigende Mengen an Zeolith NaA und in einem Vergleichsversuch eine geringe Menge Hydrosodalith zugegeben. Die in der nachfolgenden Tabelle b) angegebenen Gew.-%-Angaben für die Zusatzmengen an Zeolith bzw. Hydrosodalith beziehen sich auf das Gesamtsystem, der Anteil an Harnstoff (20 Gew.-%) bezieht sich auf die Aktivsubstanz der Harzlösung.

Auch hier werden durch Viskositätsmessungen unmittelbar nach Herstellung der wäßrigen Zubereitungen und Wiederholung der Messung nach 2 Monaten Lagerung bei Raumtemperatur die jeweiligen Stabilisierungseffekte bestimmt.

|  |  | Viskosität in mPas | |
| --- | --- | --- | --- |
|  |  | sofort | nach 2 Monaten |
| b) Melaminharzlösung | + 20 Gew.-% Harnstoff | 625 | 2990 |
|  | + 0,5 Gew.-% Zeolith NaA | 650 | 810 |
|  | + 1 Gew.-% Zeolith NaA | 650 | 480 |
|  | + 10 Gew.-% Zeolith NaA | 650 | 400 |
|  | + 0,5 Gew.-% Hydrosodalith | 650 | 1600 |

Durch Bestimmung der Formaldehydkonzentration im Luftraum über den jeweiligen Materialproben wird festgestellt, daß ab einem Zusatz von etwa 10 Gew.-% Harnstoff zur 60%igen Melaminharzlösung der Gehalt an freiem Formaldehyd auf Werte unter 0,3 ppm abgesenkt ist.

Beispiel 2

Ein 60 Gew.-% Melaminharz enthaltendes wäßriges Einsatzmaterial wird mit unterschiedlichen Mengen phosphoriger Säure versetzt. Die phosphorige Säure kommt dabei als 70%ige Lösung in wäßrigem Medium zum Einsatz, wobei als wäßriges Medium in vergleichenden Versuchen destilliertes Wasser, Leitungswasser, eine 15%ige Natriumchloridlösung, gesättigte Natriumchloridlösung und eine gesättigte Calciumchloridlösung Verwendung finden.

In getrennten Ansätzen wird jeweils die Aushärtungszeit dieser verschiedenen Materialmischungen bestimmt, wobei vergleichende Versuche durchgeführt werden bei Raumtemperatur, bei 40 °C und bei 70 °C. Als Aushärtungszeit wird der Zeitraum bestimmt, von dem ab das System im Handversuch mit dem Spatel nicht mehr rührfähig ist. Dabei wird in den vergleichsweise langsam härtenden Systemen als zeitliche Obergrenze die Versuchsdauer von 1 Stunde (1 h) gewählt. Liegt die Dauer der Aushärtung unterhalb dieses Grenzwertes, dann ist die Aushärtungszeit in Minuten (') und Sekunden ('') angegeben. Die nachfolgende Tabelle faßt die bei diesen vergleichenden Versuchen bestimmten Aushärtungszeiten zusammen.

| Bedingungen 60%ige Harz-Lsg. Aushärtungszeit bei RT / 40°C / 70°C in | + 2 % Säure-Lsg. RT / 40°C / 70°C | + 6 % Säure-Lsg. RT / 40°C / 70°C | + 10 % Säure-Lsg. RT / 40°C / 70°C | + 14 % Säure-Lsg. RT / 40°C / 70°C |
|---|---|---|---|---|
| a) dest. Wasser | 1h/ 1h/11'53'' | 45'/11'/4'41'' | 4'/3'11''/1'56'' | 3'/2'05''/52'' |
| b) Leitungswasser | 1h/ 1h/8'24'' | 45'/12'05''/3'29'' | 4'05''/3'23''/1'50'' | 3'/1'15''/55'' |
| c) 15%ige NaCl-Lsg. | 1h/41'20''/13' | 18'/11'03''/5' | 3'/2'10''/1'22'' | 2'/55''/29'' |
| d) gesätt. NaCl-Lsg. | 1h/35'/12' | 25'/10'05''/4'05'' | 1'41''/1'32''/1'02'' | 55''/49''/24'' |
| e) gesätt. CaCl$_2$-Lsg. | 1h/30'/7'29'' | 6'40''/5'/2'35'' | 1'49''/1'29''/1'17'' | 1'08''/45''/33'' |

**Patentansprüche**

1. Wäßrige Zubereitungen von Säure-härtbaren Melaminharzen und/oder Harnstoff-Formaldehyd-Kondensaten, die insbesondere für den Einsatz bei der Gesteinsverfestigung und/oder Hohlraumverfüllung z. B. im Tunnel- und Bergbau geeignet sind, dadurch gekennzeichnet, daß sie zur Erhöhung ihrer Gebrauchsfähigkeit, insbesondere zur Verlängerung ihrer Lagerfähigkeit, einen Zusatz von Zeolith NaA und/oder Hydrosodalith enthalten.

2. Wäßrige Zubereitungen nach Anspruch 1, dadurch gekennzeichnet, daß sie den Zeolith NaA bzw. Hydrosodalith in Mengen von etwa 0,1 bis 20 Gew.-%, vorzugsweise von etwa 0,5 bis 15 Gew.-% - jeweils bezogen auf Aktivsubstanz-Gehalt der wäßrigen Harzzubereitung - suspendiert enthalten.

3. Wäßrige Zubereitungen nach Ansprüchen 1 und 2, dadurch gekennzeichnet, daß sie zusätzlich Harnstoff, vorzugsweise in Mengen von etwa 10 bis 40 Gew.-%, bezogen auf den Aktivsubstanz-Gehalt der wäßrigen Harzlösung, gelöst enthalten.

4. Wäßrige Zubereitungen nach Ansprüchen 1 bis 3, dadurch gekennzeichnet, daß ihr Aktivsubstanz-Gehalt an härtbaren Melaminharzen und/oder Harnstoff-Formaldehydkondensaten etwa 50 bis 80 Gew.-%, vorzugsweise etwa 55 bis 75 Gew.-% - bezogen auf wäßrige Lösung - beträgt.

5. Verfahren zur Gesteinsverfestigung z. B. im Tunnel- und Bergbau durch Injektion wäßriger Aufbereitungen von Melaminharz- und/oder Harnstoff-Formaldehyd-Kondensaten zusammen mit einem sauren Härter, dadurch gekennzeichnet, daß wäßrige Zubereitungen eingesetzt werden, die zusammen mit den Melaminharz- und/oder Harnstoff-Formaldehyd-Kondensaten suspendierten Zeolith NaA und/oder Hydrosodalith enthalten und vor der Injektion mit einer bevorzugt wäßrigen Lösung des sauren Härters vermischt worden sind.

6. Verfahren nach Anspruch 5, dadurch gekennzeichnet, daß als Härter wäßrige Lösungen von Mineralsäuren, bevorzugt eine wäßrige Lösung von phosphoriger Säure eingesetzt werden.

7. Verfahren nach Ansprüchen 5 und 6, dadurch gekennzeichnet, daß die Mineralsäuren in wäßrigen Elektrolytsalzlösungen zum Einsatz kommen, die bei einem bevorzugten Säuregehalt von etwa 10 bis 30 Gew.-% die gelösten Elektrolytsalze insbesondere in Mengen von etwa 10 bis 40 Gew.-% enthalten.

8. Verfahren nach Ansprüchen 5 bis 7, dadurch gekennzeichnet, daß als Elektrolytsalze im wäßrigen Härter Alkali- und/oder Erdalkalisalze beispielsweise Chloride des Natriums, Calciums und/oder Magnesiums eingesetzt werden.

9. Verwendung von Zeolith NaA in wäßrigen Zubereitungen von Säure-härtbaren Melaminharzen und/oder Harnstoff-Formaldehyd-Kondensaten zur Verbesserung deren Gebrauchsfähigkeit und Verlängerung ihrer Lagerstabilität.

10. Ausführungsform nach Anspruch 9, dadurch gekennzeichnet, daß wäßrige Zubereitungen der angegebenen Art verwendet werden, die zusätzlich Harnstoff gelöst enthalten.

**Claims**

1. Aqueous preparations of acid-catalyzed melamine resins and/or urea-formaldehyde resins which are particularly suitable for use in the stabilization of rock and/or plugging of cavities, characterized in that, to increase their usefulness and particularly to extend their storability, they contain an addition of zeolite NaA and/or hydroxysodalite.

2. Aqueous preparations as claimed in claim 1, characterized in that they contain the zeolite NaA or hydroxysodalite in suspended form in quantities of from about 0.1 to 20% by weight and preferably in quantities of from about 0.5 to 15% by weight, based in each case on the active substance content of the aqueous resin preparation.

3. Aqueous preparations as claimed in claims 1 and 2, characterized in that they additionally contain urea, preferably in quantities of from about 10 to 40% by weight, based on the active substance content of the aqueous resin solution.

4. Aqueous preparations as claimed in claims 1 to 3, characterized in that their active substance content of curable melamine resins and/or urea-formaldehyde condensates is from about 50 to 80% by weight and preferably from about 55 to 75% by weight, based on aqueous solution.

5. A process for stabilizing rock, for example in tunnel construction and mining, by injection of aqueous preparations of melamine resin and/or urea-formaldehyde condensates together with an acidic catalyst, characterized in that aqueous preparations are used which contain zeolite NaA and/or hydroxysodalite suspended together with the melamine resin and/or urea-formaldehyde condensates and, before injection, are mixed with a preferably aqueous solution of the acidic catalyst.

6. A process as claimed in claim 5, characterized in that aqueous solutions of mineral acids, preferably an aqueous solution of phosphorous acid, are used as the catalyst.

7. A process as claimed in claims 5 and 6, characterized in that the mineral acids are used in aqueous electrolyte solutions which, for a preferred acid content of from about 10 to 30% by weight, contain the dissolved electrolyte salts in quantities of, in particular, from about 10 to 40% by weight.

8. A process as claimed in claims 5 to 7, characterized in that alkali and/or alkaline earth salts, for example chlorides of sodium, calcium and/or magnesium, are used as electrolyte salts in the aqueous catalyst.

9. The use of zeolite NaA in aqueous preparations of acid-catalyzed melamine resins and/or urea-formaldehyde condensates for improving their usefulness and extending their storage life.

10. The use claimed in claim 9, characterized in that aqueous preparations of the described type additionally containing urea in dissolved form are used.

**Revendications**

1. Préparations aqueuses de résines de mélamine et/ou de produits de condensation urée/formaldéhyde durcissables aux acides, qui conviennent en particulier pour la mise en oeuvre dans la consolidation de roches et/ou pour le remplissage de cavités par exemple dans la construction de tunnels et pour les mines, caractérisées en ce qu'elles renferment pour l'augmentation de leur aptitude à l'usage, en particulier pour la prolongation de leur aptitude à la conservation, un ajout de zéolite NaA et/ou d'hydrosodalité.

2. Préparations aqueuses selon la revendication 1, caractérisées en ce qu'elles renferment en suspension la zéolite NaA ou l'hydrosodalite en quantités allant d'environ 0,1 à 20 % en poids de préférence d'environ 0,5 à 15 % en poids, respectivement rapportées à la concentration en substance active de la préparation aqueuse de résine.

3. Préparations aqueuses selon les revendications 1 et 2, caractérisées en ce qu'elles renferment en supplément, de l'urée , de préférence en quantités allant d'environ 10 à 40 % en poids, rapportées à la concentration en substance active de la solution aqueuse de résine.

4. Préparations aqueuses selon les revendications 1 à 3, caractérisées en ce que leur concentration en substance active dans les résines de mélamine et/ou dans les produits de condensation urée-formaldéhyde durcissables s'élève à environ 50 à 80 % en poids, de préférence à environ 55 à 75 % en poids, rapportée à la solution aqueuse.

5. Procédé de consolidation des roches par exemple dans la construction de tunnel, ou dans les mines, par injection de préparations aqueuses de produits de condensation de résines de mélamine et/ou de produits de condensation urée-formaldéhyde conjointement avec un durcisseur acide, caractérisé en ce qu'on met en oeuvre des compositions aqueuses qui renferment conjointement avec les produits de condensation de résine de mélamine et/ou de formaldehyde-urée, de la zéolite NaA et/ou de l'hydrosodalite mises en suspension et qu'on les a mélangé avant l'injection avec une solution aqueuse de préférence du durcisseur acide;

6. Procédé selon la revendication 5, caractérisé en ce que l'on met en oeuvre en tant que durcisseur, des solutions aqueuses d'acides minéraux, de préférence une solution aqueuse d'acide phosphoreux.

7. Procédé selon les revendications 5 et 6, caractérisé en ce que les acides minéraux entrent en jeu sous forme de solutions de sels d'électrolyte qui renferment pour une teneur en acide préférée d'environ 10 à 30 % en poids, les sels d'électrolyte en solution en particulier en quantités allant d'environ 10 à 40 % en poids.

8. Procédé selon les revendications 5 à 7, caractérisé en ce que comme sels d'électrolyte dans le durcisseur aqueux, on met en oeuvre des sels de métal alcalin et/ou alcalino-terreux par exemple les chlorures de sodium, de calcium et/ou de magnésium.

9. Utilisation de la zéolite NaA dans des préparations aqueuses de résines de mélamine et/ou de produits de condensation urée-formaldéhyde durcissables à l'acide, en vue de l'amélioration de leur aptitude à l'utilisation et de la prolongation de leur stabilité à la conservation.

10. Mode d'exécution selon la revendication 9, caractérisé en ce que des préparations aqueuses du type mentionné sont utilisées qui contiennent, en solution, en supplément de l'urée.